# EUROPEAN PATENT APPLICATION

(11) **EP 2 020 769 A1**
(43) Date of publication of application: **04.02.2009**
(21) Application number: 06746862.9
(22) Date of filing: 25.05.2006
(51) Int. Cl.: H04J 11/00

(54) **MOBILE COMMUNICATION SYSTEM**

(71) Applicant: Mitsubishi Electric Corporation, Chiyoda-ku Tokyo 100-8310 (JP)
(72) Inventor: MICHIMOTO, Yukinori, Tokyo 100-8310 (JP); KANEKO, Akihiro, Tokyo 100-8310 (JP); NAKAZAWA, Masayuki, Tokyo 100-8310 (JP)
(74) Representative: Mounteney, Simon James
(86) International application number: PCT/JP2006/310483
(87) International publication number: WO 2007/138650

(57) **Abstract**

A mobile communication system in accordance with the present invention is a system in which a mobile communication terminal 200 communicates with a plurality of mobile communication base stations 100 simultaneously using a multi-carrier radio communication scheme. It includes an upstream channel quality measuring section 108 for measuring the channel quality information of subcarriers between the mobile communication base stations 100 and the mobile communication terminal 200; and a subcarrier allocation deciding section 16 for deciding the subcarrier allocation for each mobile communication base station 100 according to the channel quality information of subcarriers measured.

## Description

### TECHNICAL FIELD

The present invention relates to a mobile communication system for performing OFDM (Orthogonal Frequency Division Multiplexing) communication.

### BACKGROUND ART

As a handover, which is an example of communications between a plurality of mobile communication base stations and a mobile communication terminal, in a conventional mobile communication system, Patent Document 1, for example, discloses a different frequency handover method in a CDMA (Code Division Multiple Access) mobile communication system.

In the different frequency handover method, if a handover target mobile communication base station cannot use the same frequency band as the frequency band F1 used by a handover source radio channel frame, an unused part in a handover source radio channel frame switches the frequency band to a frequency band F2 usable by the handover target mobile communication base station, and employs it as the radio channel of the handover target.

Patent Document 1: Japanese Patent Laid-Open No. 10-136425/1998 (Paragraph 0005).

In the conventional mobile communication system with the foregoing configuration, the mobile communication terminal carries out transmission and reception with the two mobile communication base stations by switching the frequency in a time division manner by a single radio circuit of the mobile communication terminal. However, since it must perform the frequency switching or time switching, the mobile communication terminal has a problem of complicating its circuit and increasing its cost.

The present invention is implemented to solve the foregoing problem. Therefore it is an object of the present invention to provide a mobile communication system capable of realizing multi-carrier radio communication between a mobile communication terminal equipped with a single radio circuit and a plurality of mobile communication base stations in a simple, low-cost configuration without requiring the frequency switching or time switching.

### DISCLOSURE OF THE INVENTION

A mobile communication system in accordance with the present invention, in which a mobile communication terminal communicates with a plurality of mobile communication base stations simultaneously using a multi-carrier radio communication scheme, includes: channel quality measuring means for measuring channel quality information of subcarriers between the mobile communication base stations and the mobile communication terminal; and subcarrier allocation deciding means for deciding subcarrier allocation for each of the mobile communication base stations according to the channel quality information of subcarriers measured by the channel quality measuring means.

According to the present invention, an advantage is given of being able to realize the multi-carrier radio communication between the mobile communication terminal equipped with a single radio circuit and the plurality of mobile communication base stations by a simple, low-cost configuration without requiring any frequency switching or time switching.

### BRIEF DESCRIPTION OF THE DRAWINGS

FIG. 1 is a block diagram showing a configuration of a mobile communication system of an embodiment 1 in accordance with the present invention;
FIG. 2 is a diagram showing reception levels of subcarriers in the mobile communication system of the embodiment 1 in accordance with the present invention;
FIG. 3 is a block diagram showing a configuration of the mobile communication system of an embodiment 2 in accordance with the present invention;
FIG. 4 is a block diagram showing a configuration of the mobile communication system of an embodiment 3 in accordance with the present invention;
FIG. 5 is a block diagram showing a configuration of the mobile communication system of an embodiment 4 in accordance with the present invention; and
FIG. 6 is a block diagram showing a configuration of the mobile communication system of an embodiment 5 in accordance with the present invention.

### BEST MODE FOR CARRYING OUT THE INVENTION

The best mode for carrying out the invention will now be described with reference to the accompanying drawings to explain the present invention in more detail.

### EMBODIMENT 1

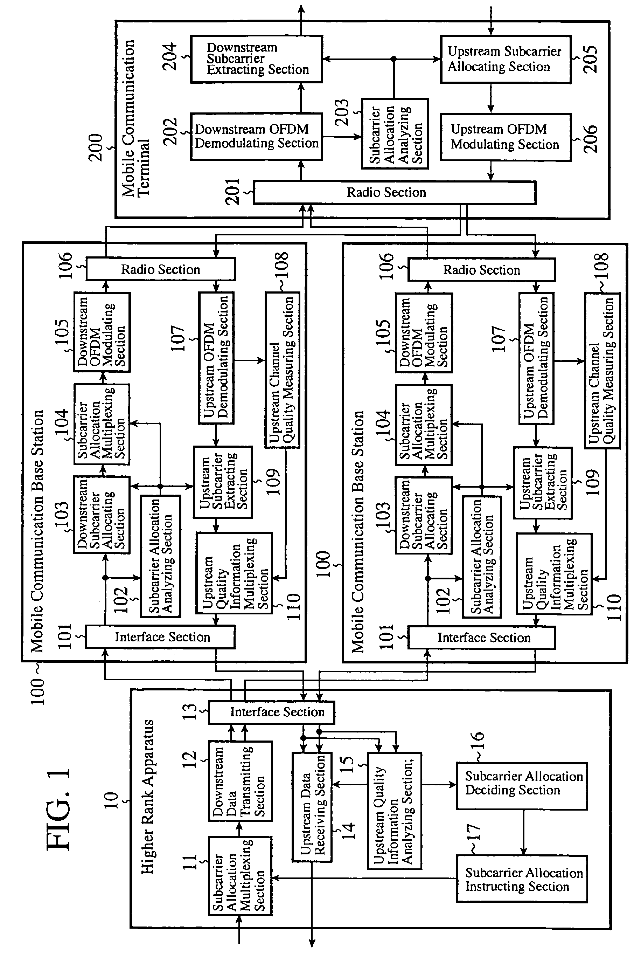

FIG. 1 is a block diagram showing a configuration of the mobile communication system of the embodiment 1 in accordance with the present invention. The present embodiment 1 relates to a multi-carrier radio communication system between a plurality of mobile communication base stations (BTS) 100 and a mobile communication terminal (MS) 200 based on a TDD (Time Division Duplex) scheme, and shows as an example an OFDM communication system between the two mobile communication base stations 100 and the mobile communication terminal 200.

The mobile communication system includes a higher rank apparatus 10, a plurality of mobile communication base stations 100 and a mobile communication terminal 200. The higher rank apparatus 10 integrates the plurality of mobile communication base stations 100 to carry out simultaneous communication through a cable network. Each mobile communication base station 100 communicates with the higher rank apparatus 10, and at the same time communicates with the mobile communication terminal 200 via a radio network. The mobile communication terminal 200 carries out simultaneous communication with the plurality of mobile communication base stations 100.

The simultaneous communication between the plurality of mobile communication base stations 100 and the mobile communication terminal 200 is not only applicable to a soft handover which switches a channel after the simultaneous communication of the same data between the mobile communication terminal 200 and the source mobile communication base station 100 and the target mobile communication base station 100; but also applicable to communication with high frequency utilization efficiency such as OFDM communication of a TDD system which communicates different data by selecting a subcarrier with better channel quality.

Here, the term "soft handover" refers to a technique that shifts communication from a mobile communication base station 100 to another mobile communication base station 100 while the mobile communication terminal 200, which is traveling near the cell edges of the plurality of mobile communication base stations 100, continues communication of the same data seamlessly with the plurality of mobile communication base stations 100 in synchronism with them.

The higher rank apparatus 10 shown in FIG. 1 includes a subcarrier allocation multiplexing section 11, a downstream data transmitting section 12, an interface section 13, an upstream data receiving section 14, an upstream quality information analyzing section 15, a subcarrier allocation deciding section (subcarrier allocation deciding means) 16 and a subcarrier allocation instructing section 17.

In the higher rank apparatus 10, the subcarrier allocation multiplexing section 11 multiplexes subcarrier allocation information from the subcarrier allocation instructing section 17 onto downstream data, and the downstream data transmitting section 12 outputs the downstream data in accordance with the number of the mobile communication base stations.

The interface section 13 converts the downstream data to a format fit for the network communication, and transmits to the plurality of mobile communication base stations 100. In addition, it receives the upstream data from the plurality of mobile communication base stations 100, and converts them to a format fit for the processing within the apparatus.

The upstream quality information analyzing section 15 reads upstream channel quality information from the plurality of upstream data. When the plurality of upstream data are the same data, the upstream data receiving section 14 selects and outputs the upstream data with the highest upstream channel quality on the basis of the upstream channel quality information. In contrast, when the plurality of upstream data are different data, it outputs all the upstream data.

According to the upstream channel quality information, the subcarrier allocation deciding section 16 makes a decision, for each mobile communication base station 100, to which subcarriers the downstream data addressed to which mobile communication terminals 200 are to be assigned without overlap between the subcarriers with good channel quality. The subcarrier allocation instructing section 17 converts the decided subcarrier allocation information to a format to be multiplexed onto the downstream data, and outputs it to the subcarrier allocation multiplexing section 11.

The plurality of mobile communication base stations 100 shown in FIG. 1 each include an interface section 101, a subcarrier allocation analyzing section 102, a downstream subcarrier allocating section 103, a subcarrier allocation multiplexing section 104, a downstream OFDM modulating section 105, a radio section 106, an upstream OFDM demodulating section 107, an upstream channel quality measuring section (channel quality measuring means) 108, an upstream subcarrier extracting section 109 and an upstream quality information multiplexing section 110.

In each mobile communication base station 100, the interface section 101 converts the downstream data to a format fit for the processing within the apparatus; and converts the upstream data to the format fit for the network communication and transmits it. The subcarrier allocation analyzing section 102 reads out the subcarrier allocation information multiplexed onto the downstream data.

According to the subcarrier allocation information, the downstream subcarrier allocating section 103 rearranges the downstream data in such a manner that the downstream data addressed to the mobile communication terminal 200 comes to the subcarrier to be used, thereby assigning the subcarrier to the downstream data. The subcarrier allocation multiplexing section 104 multiplexes the subcarrier allocation information read out onto the downstream data.

The downstream OFDM modulating section 105 OFDM modulates the downstream data. The radio section 106 transmits the OFDM modulated downstream data to the mobile communication terminal 200 as a radio signal, and receives the upstream data transmitted from the mobile communication terminal 200 as a radio signal.

The upstream OFDM demodulating section 107 OFDM demodulates the received upstream data. The upstream channel quality measuring section 108 measures the reception level of an upstream subcarrier as the upstream channel quality information. According to the subcarrier allocation information read out, the upstream subcarrier extracting section 109 extracts from the subcarrier the upstream data transmitted from the mobile communication terminal 200. The upstream quality information multiplexing section 110 multiplexes onto the upstream data the upstream channel quality information measured by the upstream channel quality measuring section 108.

The mobile communication terminal 200 shown in FIG. 1 includes a radio section 201, a downstream OFDM demodulating section 202, a subcarrier allocation analyzing section 203, a downstream subcarrier extracting section 204, an upstream subcarrier allocating section 205 and an upstream OFDM modulating section 206.

In the mobile communication terminal 200, the radio section 201 receives the downstream data transmitted from the plurality of mobile communication base stations 100 as radio signals, and transmits the OFDM modulated upstream data to the plurality of mobile communication base stations 100 as radio signals. The downstream OFDM demodulating section 202 OFDM demodulates the downstream data.

The subcarrier allocation analyzing section 203 reads out the subcarrier allocation information multiplexed onto the downstream data. According to the subcarrier allocation information read out, the downstream subcarrier extracting section 204 extracts the downstream data addressed to the terminal itself by assigning the subcarrier by rearranging the downstream data.

According to the subcarrier allocation information read out, the upstream subcarrier allocating section 205 rearranges the upstream data in such a manner that the upstream data of the apparatus comes to the subcarrier to be used, thereby assigning the subcarrier to the upstream data. The upstream OFDM modulating section 206 OFDM modulates the upstream data.

Next, the operation will be described.
First, the downstream data communication from the higher rank apparatus 10 to the mobile communication terminal 200 will be described.
In the higher rank apparatus 10, the subcarrier allocation multiplexing section 11 multiplexes the subcarrier allocation information from the subcarrier allocation instructing section 17 onto the downstream data to be transmitted to the mobile communication terminal 200. The subcarrier allocation information designates, for each mobile communication base station 100, to which subcarriers the downstream data addressed to which mobile communication terminals 200 are to be assigned.

The downstream data transmitting section 12 outputs, in accordance with the number of the mobile communication base stations, a plurality of downstream data onto which the subcarrier allocation information is multiplexed by the subcarrier allocation multiplexing section 11. The interface section 13 converts the plurality of downstream data from the downstream data transmitting section 12 to the format fit for the network communication, and transmits to the plurality of mobile communication base stations 100.

In each mobile communication base station 100, the interface section 101 receives the downstream data transmitted from the higher rank apparatus 10, and converts it to the format fit for the processing within the apparatus. The subcarrier allocation analyzing section 102 reads out the subcarrier allocation information multiplexed onto the downstream data whose format is converted to the format fit for the processing within the apparatus by the interface section 101.

According to the subcarrier allocation information read out by the subcarrier allocation analyzing section 102, the downstream subcarrier allocating section 103 rearranges the downstream data in such a manner that the downstream data addressed to the mobile communication terminal 200 comes to the subcarrier to be used, thereby assigning the subcarrier to the downstream data. The subcarrier allocation multiplexing section 104 multiplexes the subcarrier allocation information read out by the subcarrier allocation analyzing section 102 onto the downstream data to which the subcarrier is assigned by the downstream subcarrier allocating section 103.

The downstream OFDM modulating section 105 OFDM modulates the downstream data to which the subcarrier is assigned by the subcarrier allocation multiplexing section 104. The radio section 106 transmits the downstream data OFDM modulated by the OFDM modulating section 105 to the mobile communication terminal 200 as the radio signal.

In the mobile communication terminal 200, the radio section 201 receives the plurality of downstream data transmitted from the plurality of mobile communication base stations 100 as the radio signals, and the downstream OFDM demodulating section 202 OFDM demodulates the plurality of downstream data received by the radio section 201.

The subcarrier allocation analyzing section 203 reads out the subcarrier allocation information multiplexed onto the plurality of downstream data OFDM demodulated by the downstream OFDM demodulating section 202. To decide the locations into which the downstream data addressed to the apparatus itself are multiplexed, according to the subcarrier allocation information read out by the subcarrier allocation analyzing section 203, the downstream subcarrier extracting section 204 extracts the plurality of downstream data addressed to the terminal itself by assigning the subcarriers by rearranging the plurality of downstream data OFDM demodulated by the downstream OFDM demodulating section 202.

Next, the upstream data communication from the mobile communication terminal 200 to the higher rank apparatus 10 will be described.
In the mobile communication terminal 200, according to the subcarrier allocation information read out by the subcarrier allocation analyzing section 203, the upstream subcarrier allocating section 205 assigns the subcarriers to the upstream data by rearranging the upstream data in such a manner that the upstream data of the terminal itself comes to the subcarriers to be used.

The upstream OFDM modulating section 206 OFDM modulates the upstream data to which the subcarriers are assigned by the upstream subcarrier allocating section 205. The radio section 201 transmits the upstream data OFDM modulated by the upstream OFDM modulating section 206 to the plurality of mobile communication base stations 100 as the radio signals.

In each mobile communication base station 100, the radio section 106 receives the OFDM modulated upstream data transmitted from the mobile communication 200 as the radio signals, and the upstream OFDM demodulating section 107 OFDM demodulates the upstream data received by the radio section 106.

The upstream channel quality measuring section 108 measures the reception level of the upstream subcarrier as the upstream channel quality information. The target to be measured by the upstream channel quality measuring section 108 of the mobile communication base station 100 can be an SIR (Signal to Interference Ratio) rather than the reception level. Although the measurement of the reception level is easier, the measurement of the SIR can decide the channel quality more accurately.

According to the allocation information of the subcarrier read out by the subcarrier allocation analyzing section 102, the upstream subcarrier extracting section 109 extracts from the subcarrier the upstream data transmitted from the mobile communication terminal 200. The upstream quality information multiplexing section 110 multiplexes the upstream channel quality information measured by the upstream channel quality measuring section 108 onto the upstream data extracted by the upstream subcarrier extracting section 109. The interface section 101 converts the upstream data from the upstream quality information multiplexing section 110 to the format fit for the network communication, and transmits to the higher rank apparatus 10.

In the higher rank apparatus 10, the interface section 13 receives the plurality of upstream data from the plurality of mobile communication base stations 100, and converts them to the format fit for the processing within the apparatus. The upstream quality information analyzing section 15 reads out the plurality of pieces of the upstream channel quality information multiplexed onto the plurality of upstream data converted by the interface section 13 to the format fit for the processing within the apparatus. The upstream data receiving section 14 selects and outputs, when the upstream data are the same, the upstream data with the highest upstream channel quality on the basis of each upstream channel quality information read out by the upstream quality information analyzing section 15; and outputs, when the plurality of upstream data are different, all the upstream data.

According to the upstream channel quality information read out by the upstream quality information analyzing section 15, the subcarrier allocation deciding section 16 makes a decision, for each mobile communication base station, to which subcarriers the downstream data addressed to which mobile communication terminals 200 are to be assigned without overlap between the subcarriers with good channel quality. The subcarrier allocation instructing section 17 converts the subcarrier allocation information decided by the subcarrier allocation deciding section 16 to the format to be multiplexed onto the downstream data, and outputs to the subcarrier allocation multiplexing section 11.

As for the contents of the upstream data and downstream data, there are two cases where the plurality of mobile communication base stations 100 communicate the same data, which is applied to the soft handover; and where they communicate different data, which is applied to the communication of high frequency utilization efficiency.

In the case of communicating the same data in the downstream communication, the downstream data transmitting section 12 of the higher rank apparatus 10 duplicates the downstream data in accordance with the number of the mobile communication base stations and outputs them. The downstream subcarrier extracting section 204 of the mobile communication terminal 200 combines the same data assigned to the different subcarriers after checking the correctness by a CRC (Cyclic Redundancy Check) or the like.

In addition, in the case of communicating the same data in the upstream communication, the upstream subcarrier allocating section 205 of the mobile communication terminal 200 assigns the same data to the different subcarriers, and outputs them. The upstream data receiving section 14 of the higher rank apparatus 10 selects, according to the upstream channel quality information, the upstream data with the highest upstream channel quality from the mobile communication base stations 100, and outputs it.

Furthermore, in the case of communicating the different data in the downstream communication, the downstream data transmitting section 12 of the higher rank apparatus 10 assigns the different downstream data to the mobile communication base stations 100 in order and outputs them. The downstream subcarrier extracting section 204 of the mobile communication terminal 200 outputs the different downstream data assigned to the different subcarriers in order.

In addition, in the case of communicating the different data in the upstream communication, the upstream subcarrier allocating section 205 of the mobile communication terminal 200 assigns the different upstream data to the different subcarriers in order and outputs them. The upstream data receiving section 14 of the higher rank apparatus 10 outputs the different upstream data in order.

As examples of a data allocation method to the mobile communication base stations 100 and to the subcarriers, there are examples which assign the arrival data in order, and which assign after performing sequence control for forming into lines in accordance with the data type. Since the communication utilizes the subcarriers with high channel quality of the plurality of mobile communication base stations 100, it offers an advantage of being able to increase the frequency band the mobile communication terminal 200 can use at high channel quality.

An example of the operation of the upstream channel quality measuring section 108 in the mobile communication base station 100 and that of the subcarrier allocation deciding section 16 in the higher rank apparatus 10 will be described.
As described above, the upstream channel quality measuring section 108 measures the reception level of the upstream subcarrier and outputs the upstream channel quality information. The subcarrier allocation deciding section 16 decides, for each mobile communication base station 100, to which subcarriers the downstream data addressed to which mobile communication terminals 200 are to be assigned without overlap of the subcarriers with good channel quality in accordance with the upstream channel quality information. The operation of the upstream channel quality measuring section 108 and that of the subcarrier allocation deciding section 16 described below are applied when the subcarriers are assigned in an initial state, or a vacant subcarrier is assigned additionally, or a subcarrier in use is reassigned.

### EXAMPLE 1

The upstream channel quality measuring section 108 of the mobile communication base station 100 measures the average value of reception levels of all the subcarriers and the reception level of each subcarrier as the upstream channel quality information. The subcarrier allocation deciding section 16 of the higher rank apparatus 10 assigns each mobile communication base station 100 a subcarrier whose reception level is equal to or lower than the average value of reception levels of all the subcarriers in such a manner that the subcarriers do not overlap between the mobile communication base stations 100.

Here, the reason for assigning the subcarriers whose reception levels are equal to or lower than the average value of reception levels of all the subcarriers is that it is highly probable that these subcarriers are vacant subcarriers which are not used in other communications such as in other mobile communication base stations 100 and in a mobile communication system integrated by another higher rank apparatus 10. Calculating the average value in advance in this way makes it possible to decide the vacant subcarriers capable of being assigned by comparing the individual reception levels with the average value, thereby being able to reduce the amount of calculation of the subcarrier allocation.

### EXAMPLE 2

The upstream channel quality measuring section 108 of the mobile communication base station 100 measures the minimum reception level of all the subcarriers and the reception level of each subcarrier as the upstream channel quality information. The subcarrier allocation deciding section 16 of the higher rank apparatus 10 assigns each mobile communication base station 100 a subcarrier whose reception level is within a fixed range from the minimum reception level in such a manner that the subcarriers do not overlap between the mobile communication base stations 100. Here, the reason for assigning the subcarriers within the fixed range from the minimum reception level is that it is highly probable that they can be vacant subcarriers not used by other communications.

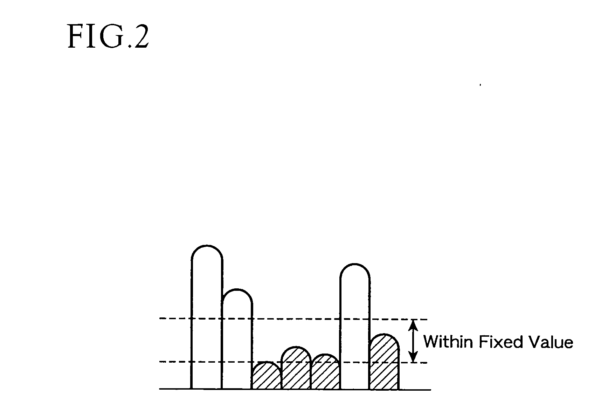

FIG. 2 is a diagram showing reception levels of the subcarriers. When there are many subcarriers in use, it is likely in the foregoing example 1 that the average value becomes large and that a subcarrier with much noise or a subcarrier which is in use but attenuated to below the average is assigned to the communication. Assigning the subcarrier whose reception level is within the fixed range from the minimum reception level to the communication enables the subcarrier allocation regardless of the present state of the subcarriers in use, thereby enabling high quality communication.

### EXAMPLE 3

The upstream channel quality measuring section 108 of the mobile communication base station 100 measures the moving average value of the reception level of each subcarrier as the upstream channel quality information. The subcarrier allocation deciding section 16 of the higher rank apparatus 10 assigns each mobile communication base station 100 a subcarrier with a low moving average value of the reception level in such a manner that the subcarriers do not overlap between the mobile communication base stations 100. Here, the reason for assigning the subcarriers with the low moving average values is that it is highly probable that they are vacant subcarriers not used in other communications.

### EXAMPLE 4

The upstream channel quality measuring section 108 of the mobile communication base station 100 divides the subcarriers into several blocks according to the frequency band, and calculates the reception level of a subcarrier block consisting of a plurality of subcarriers, such as the sum or the average value of reception levels of the subcarriers in the block.

Then, the upstream channel quality measuring section 108 substitutes the calculated reception level of the subcarrier block for the reception level of each subcarrier in the foregoing example 1, and measures the average value of reception levels of all the subcarriers and the reception levels of the subcarrier blocks as the upstream channel quality information. The subcarrier allocation deciding section 16 of the higher rank apparatus 10 assigns each mobile communication base station 100 a subcarrier block whose reception level is equal to or less than the average value of all the subcarriers in such a manner that the subcarriers do not overlap between the mobile communication base stations 100.

As another method, the upstream channel quality measuring section 108 can measure the minimum reception level of all the subcarriers and the reception levels of the subcarrier blocks as the upstream channel quality information by substituting the calculated reception levels of the subcarrier blocks for the reception levels of the respective subcarriers in the foregoing example 2; and the subcarrier allocation deciding section 16 of the higher rank apparatus 10 can assign each mobile communication base station 100 a subcarrier block whose reception level is within the fixed range from the minimum reception level in such a manner that the subcarrier blocks do not overlap between the mobile communication base stations 100.

As still another method, the upstream channel quality measuring section 108 can obtain the moving average value of the reception level of each calculated subcarrier block, and can measure, by substituting it for the moving average value of the reception level of each subcarrier in the foregoing example 3, the moving average value of the reception level of each subcarrier block as the upstream channel quality information; and the subcarrier allocation deciding section 16 of the higher rank apparatus 10 can assign each mobile communication base station 100 a subcarrier block with a low moving average value of the reception level in such a manner that the subcarrier blocks do not overlap between the mobile communication base stations 100.

When making a decision of the subcarrier allocation on a subcarrier by subcarrier basis in the foregoing example 1 to example 3, it is assumed that the subcarriers with high channel quality information are scattered rather than forming a group. Accordingly, it becomes separate subcarrier allocation, thereby being able to realize fading-resistant communication. In contrast, the present example 4 comes to assign a group of subcarriers whose subcarrier numbers are continuous, thereby being able to maintain the orthogonality and to realize highly reliable communication.

### EXAMPLE 5

The upstream channel quality measuring section 108 of the mobile communication base station 100 normalizes the reception level of each subcarrier by the reception levels of all the subcarriers.

Then, the upstream channel quality measuring section 108 measures the average value of reception levels of all the subcarriers and the normalized reception levels of the subcarriers as the upstream channel quality information by substituting the normalized reception level of each subcarrier for the reception level of each subcarrier in the foregoing example 1; and the subcarrier allocation deciding section 16 of the higher rank apparatus 10 assigns each mobile communication base station 100 a subcarrier whose normalized reception level is equal to or lower than the average value of all the subcarriers in such a manner that the subcarriers do not overlap between the mobile communication base stations 100.

As another method, the upstream channel quality measuring section 108 can measure the minimum reception level of all the subcarriers and the normalized reception levels of the subcarriers as the upstream channel quality information by substituting the normalized reception levels of the subcarriers for the reception levels of the respective subcarriers in the foregoing example 2; and the subcarrier allocation deciding section 16 of the higher rank apparatus 10 can assign each mobile communication base station 100 a subcarrier block whose normalized reception level is within the fixed range from the minimum reception level in such a manner that the subcarrier blocks do not overlap between the mobile communication base stations 100.

As still another method, the upstream channel quality measuring section 108 can obtain the moving average value of the normalized reception level of each subcarrier, and can measure, by substituting it for the moving average value of the reception level of each subcarrier in the foregoing example 3, the moving average value of the normalized reception level of each subcarrier as the upstream channel quality information; and the subcarrier allocation deciding section 16 of the higher rank apparatus 10 can assign each mobile communication base station 100 a subcarrier block with a low moving average value of the normalized reception level in such a manner that the subcarrier blocks do not overlap between the mobile communication base stations 100.

As in the present example 5, normalizing the reception level of each subcarrier by the reception levels of all the subcarriers enables impartial subcarrier allocation in which the mobile communication base stations 100 have their standards matched.

### EXAMPLE 6

In the foregoing example 1 to example 5, if the mobile communication base station 100 the mobile communication terminal 200 uses for the communication changes before and after the movement, the subcarrier allocation deciding section 16 of the higher rank apparatus 10 preferentially assigns the subcarrier of the mobile communication base station 100 that has continued the communication for more than a fixed time before the movement in such a manner that the subcarrier allocation does not overlap between the mobile communication base stations 100.

As in the present example 6, assigning the subcarriers to the mobile communication base stations 100 by fixing an order of priority makes it possible, in the communication near the boundary between the regions of the individual mobile communication base stations 100, to prevent the mobile communication base station 100 in charge of the communication from being changed often, thereby being able to reduce the control signals involved in the subcarrier allocation.

### EXAMPLE 7

In the foregoing example 1 to example 5, the subcarrier allocation deciding section 16 of the higher rank apparatus 10 assigns a subcarrier to the plurality of mobile communication base stations 100 in tern. For example, the subcarrier allocation deciding section 16 assigns a subcarrier to the two mobile communication base stations 100 alternately.

The present embodiment 7 enables, by assigning the subcarrier to the plurality of mobile communication base stations 100 in turn, impartial subcarrier allocation to the mobile communication base stations 100.

As described above, according to the present embodiment 1, the upstream channel quality measuring section 108 of each mobile communication base station 100 measures the reception level of the upstream subcarrier from the mobile communication terminal 200 as the upstream channel quality information; the upstream quality information multiplexing section 110 of each mobile communication base station 100 multiplexes the upstream channel quality information onto the upstream data; the upstream quality information analyzing section 15 of the higher rank apparatus 10 reads the upstream channel quality information multiplexed onto the upstream data; and the subcarrier allocation deciding section 16 of the higher rank apparatus 10 decides the subcarrier allocation to the downstream data on the basis of the upstream channel quality information. Thus, the present embodiment 1 offers an advantage of being able to realize the multi-carrier radio communication between the mobile communication terminal equipped with the single radio circuit and the plurality of mobile communication base stations by a simple, low-cost configuration without requiring the frequency switching or time switching.

In addition, according to the present embodiment 1, the subcarrier allocation deciding section 16 of the higher rank apparatus 10 decides the subcarrier allocation to the downstream data on the basis of the upstream channel quality information. Thus, it can use subcarriers of good communication environment, thereby offering an advantage of being able to realize the multi-carrier radio communication with high frequency efficiency.

### EMBODIMENT 2

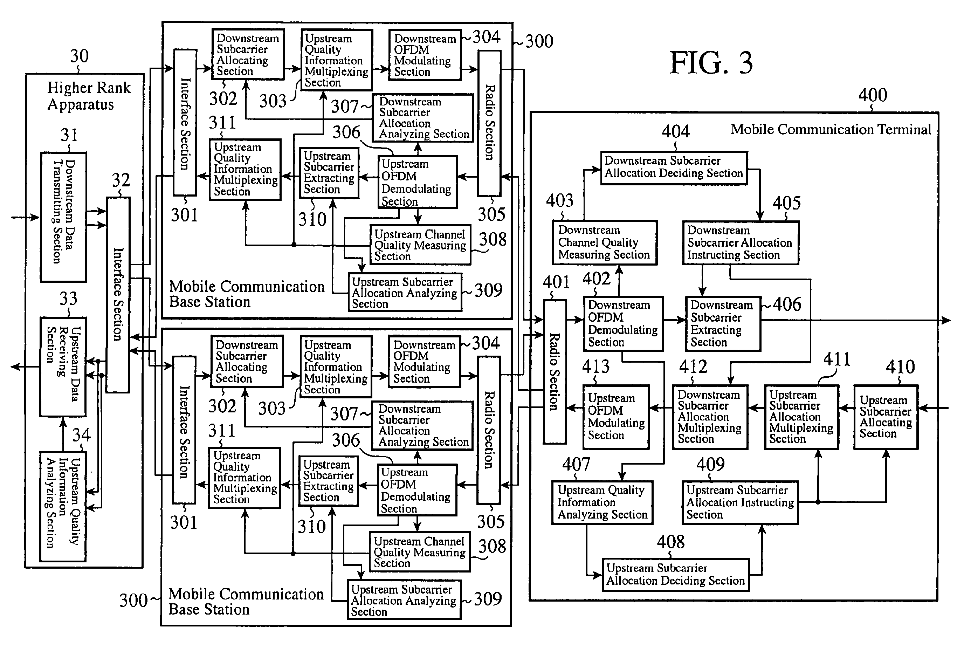

FIG. 3 is a block diagram showing a configuration of the mobile communication system of the embodiment 2 in accordance with the present invention. The present embodiment 2 relates to a multi-carrier radio communication system between a plurality of mobile communication base stations 300 and a mobile communication terminal 400 employing an FDD (Frequency Division Duplex) scheme. Thus, an OFDM communication system between the two mobile communication base stations 300 and the mobile communication terminal 400 is shown as an example.

The mobile communication system includes a higher rank apparatus 30, the plurality of mobile communication base stations 300 and the mobile communication terminal 400. The higher rank apparatus 30 integrates the plurality of mobile communication base stations 300, and performs simultaneous communication through a cable network. Each mobile communication base station 300 communicates with the higher rank apparatus 30, and at the same time with the mobile communication terminal 400 through a radio network. The mobile communication terminal 400 performs simultaneous communication with a plurality of mobile communication base stations 300.

The higher rank apparatus 30 shown in FIG. 3 includes a downstream data transmitting section 31, an interface section 32, an upstream data receiving section 33 and an upstream quality information analyzing section 34.

In the higher rank apparatus 30, the downstream data transmitting section 31 outputs a plurality of downstream data in accordance with the number of the mobile communication base stations. The interface section 32 converts the downstream data to the format fit for the network communication and transmits to the plurality of mobile communication base stations 300. In addition, it receives the upstream data from the plurality of mobile communication base stations 300, and converts them to the format fit for the processing within the apparatus.

The upstream quality information analyzing section 34 reads out the upstream channel quality information from the upstream data. When the plurality of upstream data are the same data, the upstream data receiving section 33 selects and outputs the upstream data with the highest upstream channel quality on the basis of the upstream channel quality information. In contrast, when the plurality of upstream data are different data, it outputs all the upstream data.

Each mobile communication base station 300 shown in FIG. 3 includes an interface section 301, a downstream subcarrier allocating section 302, an upstream quality information multiplexing section 303, a downstream OFDM modulating section 304, a radio section 305, an upstream OFDM demodulating section 306, a downstream subcarrier allocation analyzing section 307, an upstream channel quality measuring section (channel quality measuring means) 308, an upstream subcarrier allocation analyzing section 309, an upstream subcarrier extracting section 310 and an upstream quality information multiplexing section 311.

In each mobile communication base station 300, the interface section 301 converts the downstream data to the format fit for the processing within the apparatus; and converts the upstream data to the format fit for the network communication and transmits it. According to the downstream subcarrier allocation information from the downstream subcarrier allocation analyzing section 307, the downstream subcarrier allocating section 302 rearranges the downstream data in such a manner that the downstream data addressed to the relevant mobile communication terminal 400 comes to the subcarrier to be used, thereby assigning the subcarriers to the downstream data.

The upstream quality information multiplexing section 303 multiplexes the upstream channel quality information measured by the upstream channel quality measuring section 308 onto the downstream data. The downstream OFDM modulating section 304 OFDM modulates the downstream data. The radio section 305 transmits the OFDM modulated downstream data to the mobile communication terminal 400 as a radio signal, and receives the OFDM modulated upstream data transmitted from the mobile communication terminal 400 as a radio signal.

The upstream OFDM demodulating section 306 OFDM demodulates the received upstream data. The downstream subcarrier allocation analyzing section 307 reads out the downstream subcarrier allocation information multiplexed onto the upstream data. The upstream channel quality measuring section 308 measures the reception level of the upstream subcarrier as the upstream channel quality information.

The upstream subcarrier allocation analyzing section 309 reads out the upstream subcarrier allocation information multiplexed onto the upstream data. According to the upstream subcarrier allocation information read out, the upstream subcarrier extracting section 310 extracts the upstream data from the subcarrier. The upstream quality information multiplexing section 311 multiplexes the upstream channel quality information measured by the upstream channel quality measuring section 308 onto the upstream data.

The mobile communication terminal 400 shown in FIG. 3 includes a radio section 401, a downstream OFDM demodulating section 402, a downstream channel quality measuring section (channel quality measuring means) 403, a downstream subcarrier allocation deciding section (subcarrier allocation deciding means) 404, a downstream subcarrier allocation instructing section 405, a downstream subcarrier extracting section 406, an upstream quality information analyzing section 407, an upstream subcarrier allocation deciding section (subcarrier allocation deciding means) 408, an upstream subcarrier allocation instructing section 409, an upstream subcarrier allocating section 410, an upstream subcarrier allocation multiplexing section 411, a downstream subcarrier allocation multiplexing section 412 and an upstream OFDM modulating section 413.

In the mobile communication terminal 400, the radio section 401 receives the downstream data transmitted from the plurality of mobile communication base stations 300 as a radio signal, and transmits the OFDM modulated upstream data to the plurality of mobile communication base stations 300 as a radio signal. The downstream OFDM demodulating section 402 OFDM demodulates the downstream data. The downstream channel quality measuring section 403 measures the reception level of the downstream subcarrier as the downstream channel quality information.

According to the downstream channel quality information, the downstream subcarrier allocation deciding section 404 decides the downstream subcarrier allocation. The downstream subcarrier allocation instructing section 405 instructs the downstream subcarrier extracting section 406 to perform the downstream subcarrier allocation decided, and outputs the downstream subcarrier allocation information decided to the downstream subcarrier allocation multiplexing section 412 after converting to the format to be multiplexed to the upstream data. According to the downstream subcarrier allocation information, the downstream subcarrier extracting section 406 rearranges the downstream data and outputs it.

The upstream quality information analyzing section 407 reads out the upstream channel quality information multiplexed onto the downstream data. According to the upstream channel quality information, the upstream subcarrier allocation deciding section 408 decides the upstream subcarrier allocation. The upstream subcarrier allocation instructing section 409 converts the upstream subcarrier allocation information to the format to be multiplexed onto the upstream data, and instructs on the upstream subcarrier allocation.

According to the upstream subcarrier allocation information, the upstream subcarrier allocating section 410 rearranges the upstream data in such a manner that the subcarrier to be used comes to the upstream data, thereby assigning the subcarrier to the upstream data. The upstream subcarrier allocation multiplexing section 411 multiplexes the upstream subcarrier allocation information onto the upstream data. The downstream subcarrier allocation multiplexing section 412 multiplexes the downstream subcarrier allocation information onto the upstream data. The upstream OFDM modulating section 413 OFDM modulates the upstream data.

Next, the operation will be described.
First, the downstream data communication from the higher rank apparatus 30 to the mobile communication terminal 400 will be described.
In the higher rank apparatus 30, the downstream data transmitting section 31 outputs a plurality of downstream data in accordance with the number of the mobile communication base stations. The interface section 32 converts the plurality of downstream data from the downstream data transmitting section 31 to the format fit for the network communication, and transmits to the plurality of mobile communication base stations 300.

In each mobile communication base station 300, the downstream subcarrier allocation analyzing section 307 reads out the downstream subcarrier allocation information multiplexed onto the upstream data which is OFDM demodulated by the upstream OFDM demodulating section 306. The upstream channel quality measuring section 308 measures the reception level of the upstream subcarrier as the upstream channel quality information.

The interface section 301 receives the downstream data transmitted from the higher rank apparatus 30, and converts it to the format fit for the processing within the apparatus. According to the subcarrier allocation information read out by the downstream subcarrier allocation analyzing section 307, the downstream subcarrier allocating section 302 assigns the subcarrier to the downstream data by rearranging the downstream data in such a manner that the downstream data addressed to the relevant mobile communication terminal 400 comes to the subcarrier to be used.

The upstream quality information multiplexing section 303 multiplexes the upstream channel quality information measured by the upstream channel quality measuring section 308 onto the downstream data to which the subcarrier is assigned by the downstream subcarrier allocating section 302. The downstream OFDM modulating section 304 OFDM modulates the downstream data onto which the upstream quality information multiplexing section 303 multiplexes the upstream channel quality information. The radio section 305 transmits the downstream data, which is OFDM modulated by the downstream OFDM modulating section 304, to the mobile communication terminal 400 as a radio signal.

In the mobile communication terminal 400, the radio section 401 receives a plurality of downstream data transmitted from the plurality of mobile communication base stations 300 as the radio signals; and the downstream OFDM demodulating section 402 OFDM demodulates the plurality of downstream data received by the radio section 401.

The downstream channel quality measuring section 403 measures the reception levels of the downstream subcarriers as the downstream channel quality information. According to the downstream channel quality information on the downstream subcarriers measured by the downstream channel quality measuring section 403, the downstream subcarrier allocation deciding section 404 makes a decision to which subcarriers the downstream data from which base stations 300 are to be assigned without overlap of the subcarriers with high channel quality. As for the subcarrier allocation deciding method, the example 1 to example 7 in the foregoing embodiment 1 can be used.

The downstream subcarrier allocation instructing section 405 outputs the downstream subcarrier allocation information decided by the downstream subcarrier allocation deciding section 404 to the downstream subcarrier extracting section 406, and outputs the downstream subcarrier allocation information to the downstream subcarrier allocation multiplexing section 412 after converting to the format to be multiplexed onto the upstream data.

To locate the position into which the downstream data addressed to the terminal is multiplexed, according to the downstream subcarrier allocation information from the downstream subcarrier allocation instructing section 405, the downstream subcarrier extracting section 406 rearranges the plurality of downstream data which are OFDM demodulated by the downstream OFDM demodulating section 402, thereby assigning the subcarriers and extracting the plurality of downstream data addressed to the terminal.

Next, the upstream data communication from the mobile communication terminal 400 to the higher rank apparatus 30 will be described.
In the mobile communication terminal 400, the upstream quality information analyzing section 407 reads out the upstream channel quality information multiplexed onto the downstream data which is OFDM demodulated by the downstream OFDM demodulating section 402. According to the upstream channel quality information read out by the upstream quality information analyzing section 407, the upstream subcarrier allocation deciding section 408 decides to which subcarriers the upstream data of the terminal itself are to be assigned without overlap between the subcarriers with high channel quality. As for the subcarrier allocation deciding method, the example 1 to example 7 in the foregoing embodiment 1 can be used.

The upstream subcarrier allocation instructing section 409 outputs the upstream subcarrier allocation information decided by the upstream subcarrier allocation deciding section 408 to the subcarrier allocation multiplexing section 411. At the same time, after converting to the format to be multiplexed onto the upstream data, it outputs the upstream subcarrier allocation information decided to the upstream subcarrier allocating section 410.

According to the upstream subcarrier allocation information from the upstream subcarrier allocation instructing section 409, the upstream subcarrier allocating section 410 rearranges the upstream data in such a manner that the upstream data of the terminal comes to the subcarriers to be used, and assigns the subcarriers to the upstream data.

The upstream subcarrier allocation multiplexing section 411 multiplexes the upstream subcarrier allocation information from the upstream subcarrier allocation instructing section 409 onto the upstream data to which the subcarriers are assigned by the upstream subcarrier allocating section 410. The downstream subcarrier allocation multiplexing section 412 multiplexes the downstream subcarrier allocation information from the downstream subcarrier allocation instructing section 405 onto the upstream data.

The upstream OFDM modulating section 413 OFDM modulates the upstream data from the downstream subcarrier allocation multiplexing section 412. The radio section 401 transmits the upstream data which is OFDM modulated by the upstream OFDM modulating section 413 to the plurality of mobile communication base stations 300 as radio signals.

In each mobile communication base station 300, the radio section 305 receives the OFDM modulated upstream data transmitted from the mobile communication terminal 400 as the radio signals; and the upstream OFDM demodulating section 306 OFDM demodulates the upstream data received by the radio section 305.

The upstream channel quality measuring section 308 measures the reception levels of the upstream subcarriers as the upstream channel quality information. The upstream subcarrier allocation analyzing section 309 reads out the upstream subcarrier allocation information multiplexed onto the upstream data which are OFDM demodulated by the upstream OFDM demodulating section 306.

According to the upstream subcarrier allocation information read out by the upstream subcarrier allocation analyzing section 309, the upstream subcarrier extracting section 310 extracts the upstream data from the mobile communication terminal 400 from the subcarriers. The upstream quality information multiplexing section 311 multiplexes the upstream channel quality information measured by the upstream channel quality measuring section 308 onto the upstream data extracted by the upstream subcarrier extracting section 310. The interface section 301 converts the upstream data from the upstream quality information multiplexing section 311 to the format fit for the network communication, and transmits to the higher rank apparatus 30.

In the higher rank apparatus 30, the interface section 32 receives the upstream data from the plurality of mobile communication base stations 300, and converts to the format fit for the processing within the apparatus. The upstream quality information analyzing section 34 reads out a plurality of pieces of the upstream channel quality information multiplexed onto the plurality of upstream data which are converted to the format fit for the processing within the apparatus by the interface section 32. When the upstream data are the same data, the upstream data receiving section 33 receives the upstream data with the highest upstream channel quality in accordance with each upstream channel quality information read out by the upstream quality information analyzing section 34. In contrast, when the plurality of upstream data are different data, the upstream data receiving section 33 receives all the upstream data. Onto the received upstream data, both the upstream subcarrier allocation information and downstream subcarrier allocation information are multiplexed.

In the case of communicating the same data in the downstream communication, the downstream data transmitting section 31 of the higher rank apparatus 30 duplicates and outputs the downstream data in accordance with the number of the mobile communication base stations. The downstream subcarrier extracting section 406 of the mobile communication terminal 400 combines the same data assigned to the different subcarriers after checking the correctness by a CRC (Cyclic Redundancy Check) or the like.

In addition, in the case of communicating the same data in the upstream communication, the upstream subcarrier allocating section 410 of the mobile communication terminal 400 assigns the same data to the different subcarriers, and outputs them. The upstream data receiving section 33 of the higher rank apparatus 30 selects, according to the upstream channel quality information, the upstream data with the highest upstream channel quality from the mobile communication base stations 300, and outputs it.

Furthermore, in the case of communicating the different data in the downstream communication, the downstream data transmitting section 31 of the higher rank apparatus 30 assigns the different downstream data to the mobile communication base stations 300 in order and outputs them. The downstream subcarrier extracting section 406 of the mobile communication terminal 400 outputs the different downstream data assigned to the different subcarriers in order.

In addition, in the case of communicating the different data in the upstream communication, the upstream subcarrier allocating section 410 of the mobile communication terminal 400 assigns the different upstream data to the different subcarriers in order and outputs them. The upstream data receiving section 33 of the higher rank apparatus 30 receives the different upstream data in order.

As described above, according to the present embodiment 2, the downstream channel quality measuring section 403 of the mobile communication terminal 400 measures the reception levels of the downstream subcarriers from the respective mobile communication base stations 300 as the downstream channel quality information; the downstream subcarrier allocation deciding section 404 of the mobile communication terminal 400 decides the subcarrier allocation to the downstream data according to the downstream channel quality information; the upstream channel quality measuring section 308 of each mobile communication base station 300 measures the reception levels of the upstream subcarriers from the mobile communication terminal 400 as the upstream channel quality information; the upstream quality information multiplexing section 303 of each mobile communication base station 300 multiplexes the upstream channel quality information onto the downstream data; the upstream quality information analyzing section 407 of the mobile communication terminal 400 reads out the upstream channel quality information multiplexed onto the downstream data; and the upstream subcarrier allocation deciding section 408 of the mobile communication terminal 400 decides the subcarrier allocation to the upstream data according to the upstream channel quality information. Thus, the present embodiment 2 offers an advantage of being able to realize the multi-carrier radio communication between the mobile communication terminal equipped with the single radio circuit and the plurality of mobile communication base stations by a simple, low-cost configuration without requiring the frequency switching or time switching.

In addition, according to the present embodiment 2, the downstream subcarrier allocation deciding section 404 of the mobile communication terminal 400 decides the subcarrier allocation to the downstream data according to the downstream channel quality information; and the upstream subcarrier allocation deciding section 408 of the mobile communication terminal 400 decides the subcarrier allocation to the upstream data according to the upstream channel quality information. Thus, it can use subcarriers of good communication environment, thereby offering an advantage of being able to realize the multi-carrier radio communication with high frequency efficiency.

### EMBODIMENT 3

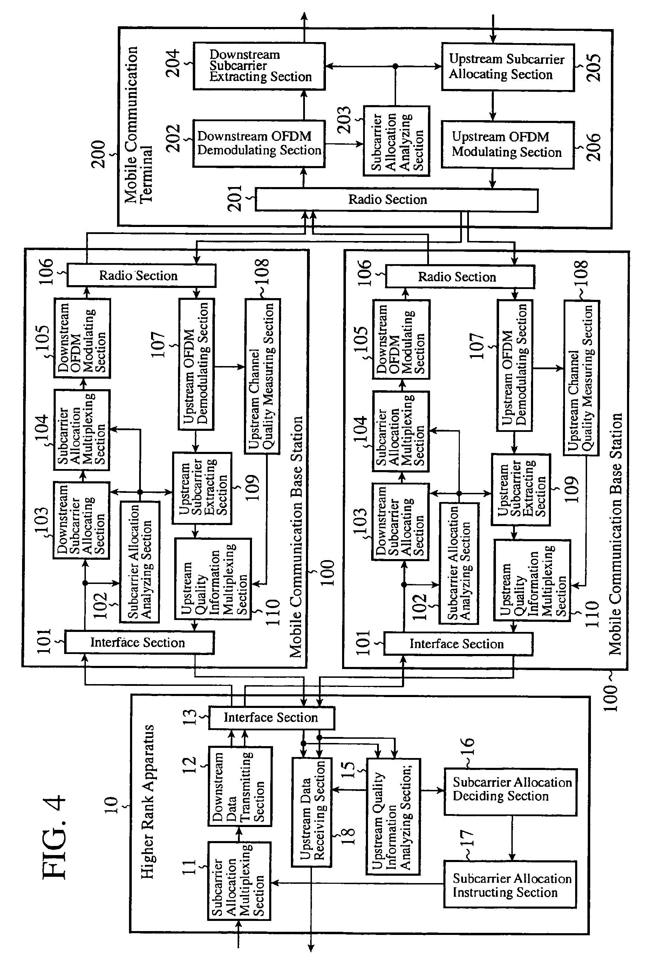

FIG. 4 is a block diagram showing a configuration of the mobile communication system of the embodiment 3 in accordance with the present invention. The mobile communication system shown in FIG. 4 replaces the upstream data receiving section 14 of the higher rank apparatus 10 in the mobile communication system of the foregoing embodiment 1 shown in FIG. 1 by an upstream data receiving section 18, and the remaining configuration is the same as that of FIG. 1.

In the foregoing embodiment 1, when the plurality of upstream data received by the interface section 13 are the same data, the upstream data receiving section 14 selects and outputs the upstream data with the highest upstream channel quality in accordance with each upstream channel quality information read out by the upstream quality information analyzing section 15; and when the plurality of upstream data are different data, it outputs all the upstream data. In contrast, as for the upstream data receiving section 18 in FIG. 4, when the plurality of upstream data are the same data, it combines them after checking the correctness of the upstream data by a CRC, which is cable information on each upstream data, or the like; and when the plurality of upstream data are different data, it checks the correctness of the upstream data by a CRC, which is the cable information on all the upstream data, or the like, and outputs the correct upstream data but discards the incorrect upstream data.

As described above, according to the present embodiment 3, the same advantage as that of the foregoing embodiment 1 can be achieve. In addition, the upstream data receiving section 18 receives the upstream data radio information based on the correctness of the data in accordance with the CRC, which is the cable information, and the like, rather than based on the upstream channel quality information. Thus, it offers an advantage of being able to perform the data transmission according to the same standards as the higher rank cable network.

### EMBODIMENT 4

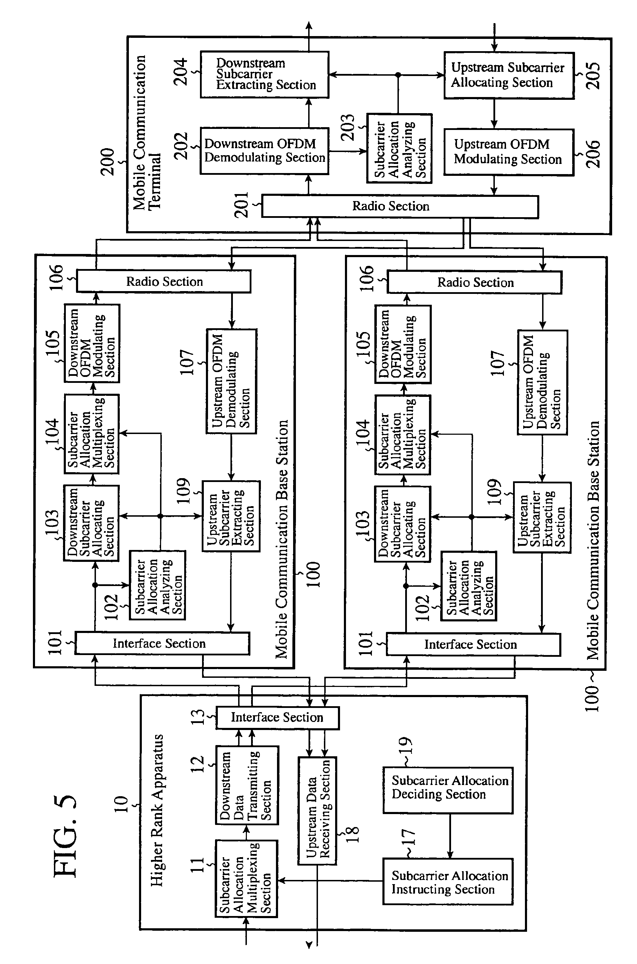

FIG. 5 is a block diagram showing a configuration of the mobile communication system of the embodiment 4 in accordance with the present invention. The mobile communication system shown in FIG. 5 eliminates the upstream quality information analyzing section 15 of the higher rank apparatus 10 shown in FIG. 4 of the foregoing embodiment 3, replaces the subcarrier allocation deciding section 16 by a subcarrier allocation deciding section 19, and eliminates the upstream channel quality measuring section 108 and the upstream channel quality information multiplexing section 110 of the mobile communication base station 100. The remaining configuration is the same as the configuration shown in FIG. 4.

The subcarrier allocation deciding section 19 of the higher rank apparatus 10 decides the subcarrier allocation based on the subcarrier number attached to each subcarrier. As a result, the present embodiment 4 eliminates the need for the upstream quality information analyzing section 15 of the higher rank apparatus 10, the upstream channel quality measuring section 108 and the upstream channel quality information multiplexing section 110 of the mobile communication base station 100 shown in FIG. 4 of the foregoing embodiment 3.

As a subcarrier allocation method by the subcarrier allocation deciding section 19 of the higher rank apparatus 10 in accordance with the subcarrier numbers, it is also possible to assign serial numbers to the mobile communication base stations 100 under the control of the higher rank apparatus 10, and to assign the vacant subcarriers in descending order or ascending order of the subcarriers to the serial numbers in descending order or ascending order of the subcarrier numbers. Alternatively, it is also possible to generate random numbers within a range of the serial numbers when assigning the subcarriers, and to assign, to the mobile communication base stations 100 with the serial numbers equal to the random numbers generated, the corresponding subcarriers. These methods can decide the subcarrier allocation by simple control without referring to the upstream channel quality information.

As described above, according to the present embodiment 4, the subcarrier allocation deciding section 19 of the higher rank apparatus 10 decides the subcarrier allocation in accordance with the subcarrier numbers. Thus, the present embodiment 4 offers an advantage of being able to realize the multi-carrier radio communication between the mobile communication terminal equipped with the single radio circuit and the plurality of mobile communication base stations by a simple, low-cost configuration without requiring the frequency switching or time switching.

### EMBODIMENT 5

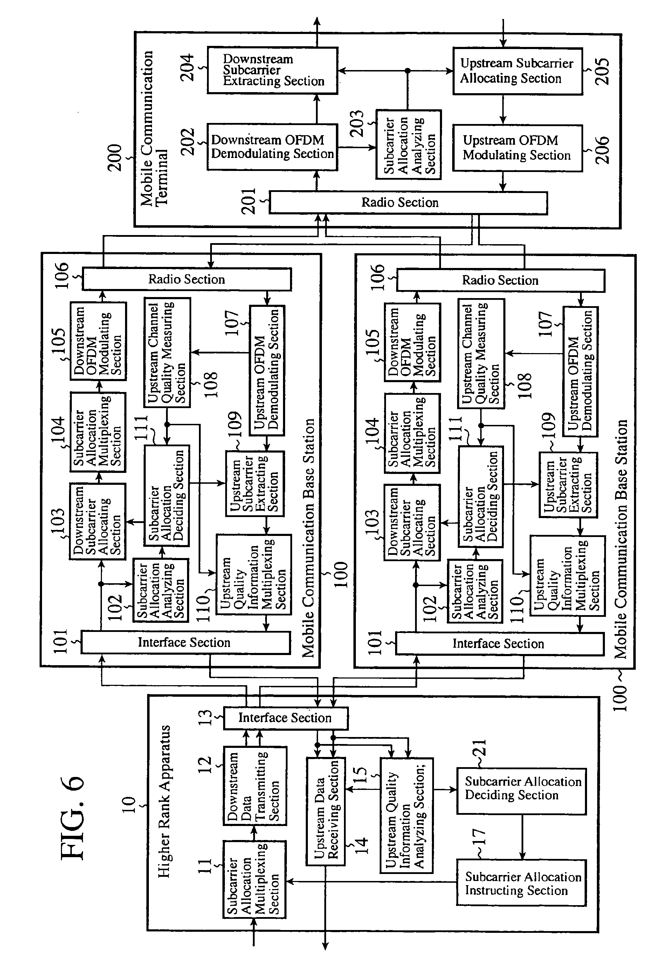

FIG. 6 is a block diagram showing a configuration of the mobile communication system of the embodiment 5 in accordance with the present invention. The mobile communication system shown in FIG. 6 replaces the subcarrier allocation deciding section 16 of the higher rank apparatus 10 of the foregoing embodiment 1 shown in FIG. 1 by a subcarrier allocation deciding section 21, and adds to the mobile communication base station 100 a subcarrier allocation deciding section 111. The remaining configuration is the same as the configuration shown in FIG. 1.

The subcarrier allocation deciding section 21 of the higher rank apparatus 10 decides, according to each upstream quality information read out by the upstream quality information analyzing section 15, the subcarrier allocation to the downstream data for each mobile communication base station 100 at comparatively long intervals, and outputs the subcarrier allocation information.

In addition, according to the long period subcarrier allocation information read out by the subcarrier allocation analyzing section 102 and the upstream channel quality information measured by the upstream channel quality measuring section 108, the subcarrier allocation deciding section 111 of each mobile communication base station 100 decides the subcarrier allocation to the downstream data at comparatively short intervals.

The present embodiment 5 is an example of increasing the efficiency of the processing by dividing the functions of the subcarrier allocation deciding section 16 in the foregoing embodiment 1 between the higher rank apparatus 10 and each mobile communication base station 100. The functional blocks of the subcarrier allocation deciding section 16 of the foregoing embodiment 1 are divided between the subcarrier allocation deciding section 21 of the higher rank apparatus 10 and the subcarrier allocation deciding section 111 of each mobile communication base station 100.

According to the upstream channel quality information of each mobile communication base station 100 and according to the number of users in operation, the subcarrier allocation deciding section 21 of the higher rank apparatus 10 decides the allocation of the plurality of subcarriers for each mobile communication base station 100 at comparatively long intervals, 10 seconds, for example, in such a manner that the frequencies do not overlap between the adjacent mobile communication base stations 100. As the allocation method of the plurality of subcarriers at comparatively long intervals by the subcarrier allocation deciding section 21, the allocation methods from the example 1 to example 7 of the foregoing embodiment 1 can be applied.

On the other hand, the subcarrier allocation deciding section 111 of each mobile communication base station 100 decides the subcarrier allocation at comparatively short intervals, at every 100 msec interval, for example. In this case, the subcarrier allocation deciding section 111 decides the subcarrier allocation freely among the plurality of subcarriers assigned by the higher rank apparatus 10. In addition, in the communication with the mobile communication terminal 200, it is also possible to assign subcarriers with low reception levels measured by the upstream channel quality measuring section 108. The reason for assigning from the subcarriers with lower reception levels is that they are possibly not used in other communications.

Using such a subcarrier deciding method enables the higher rank apparatus 10 to reduce the amount of control because it performs the control only at long intervals. In addition, since it can reduce the amount of information between the higher rank apparatus 10 and each mobile communication base station 100, a simplified higher rank apparatus 10 can integrate the individual mobile communication base stations 100. On the other hand, deciding the subcarrier allocation to the mobile communication base stations 100 at long intervals enables each mobile communication base station 100 to handle only the subcarriers assigned, thereby being able to reduce the amount of the transmission and reception processing.

As described above, according to the present embodiment 5, the same advantage as that of the foregoing embodiment 1 can be achieved. In addition, the subcarrier allocation deciding section 21 of the higher rank apparatus 10 decides, according to each upstream quality information read out by the upstream quality information analyzing section 15, the subcarrier allocation for each mobile communication base station 100 at comparatively long intervals; and the subcarrier allocation deciding section 111 of each mobile communication base station 100 decides, according to the long period subcarrier allocation information read out by the subcarrier allocation analyzing section 102 and the upstream channel quality information measured by the upstream channel quality measuring section 108, the subcarrier allocation at comparatively short intervals. Thus, the present embodiment 5 can reduce the amount of information between the higher rank apparatus 10 and each mobile communication base station 100, integrate the individual mobile communication base stations 100 by the simplified higher rank apparatus 10, and enable each mobile communication base station 100 to handle only the subcarriers assigned, thereby offering an advantage of being able to reduce the amount of the transmission and reception processing.

### INDUSTRIAL APPLICABILITY

As described above, the mobile communication system in accordance with the present invention is suitable for realizing, for example, the multi-carrier radio communication between the mobile communication terminal equipped with a single radio circuit and a plurality of mobile communication base stations by a simplified, low-cost configuration without requiring the frequency switching or time switching.

## Claims

1. A mobile communication system in which a mobile communication terminal communicates with a plurality of mobile communication base stations simultaneously using a multi-carrier radio communication scheme, said mobile communication system comprising:
channel quality measuring means for measuring channel quality information of subcarriers between said mobile communication base stations and said mobile communication terminal; and
subcarrier allocation deciding means for deciding subcarrier allocation for each of said mobile communication base stations according to the channel quality information of subcarriers measured by said channel quality measuring means.

2. The mobile communication system according to claim 1, wherein said mobile communication base stations comprise said channel quality measuring means.

3. The mobile communication system according to claim 1, wherein said mobile communication terminal comprises said channel quality measuring means.

4. The mobile communication system according to claim 1, wherein a higher rank apparatus, which integrates said plurality of mobile communication base stations, comprises said subcarrier allocation deciding means.

5. The mobile communication system according to claim 1, wherein said mobile communication terminal comprises said subcarrier allocation deciding means.

6. The mobile communication system according to claim 1, wherein a higher rank apparatus, which integrates said plurality of mobile communication base stations, and said mobile communication base stations have said subcarrier allocation deciding means.

7. The mobile communication system according to claim 1, utilizing a TDD (Time Division Duplex) system or an FDD (Frequency Division Duplex) system as the multi-carrier radio communication scheme.

8. The mobile communication system according to claim 1, wherein said channel quality measuring means measures reception levels of the subcarriers or SIRs (Signal to Interference Ratios) of the subcarriers as the channel quality information.

9. The mobile communication system according to claim 1, wherein
said channel quality measuring means measures an average value of reception levels of the subcarriers as the channel quality information; and
said subcarrier allocation deciding means decides the subcarrier allocation according to the average value of reception levels of the subcarriers measured by said channel quality measuring means.

10. The mobile communication system according to claim 1, wherein
said channel quality measuring means measures a minimum reception level of the subcarriers as the channel quality information; and
said subcarrier allocation deciding means decides the subcarrier allocation according to the minimum reception level measured by said channel quality measuring means.

11. The mobile communication system according to claim 1, wherein
said channel quality measuring means measures moving average values of the subcarriers as the channel quality information; and
said subcarrier allocation deciding means decides the subcarrier allocation according to the moving average values of the subcarriers measured by said channel quality measuring means.

12. The mobile communication system according to claim 1, wherein
said channel quality measuring means measures, as the channel quality information, reception levels of subcarrier blocks each of which integrates a plurality of subcarriers; and
said subcarrier allocation deciding means decides the subcarrier allocation according to the reception levels of the subcarrier blocks measured by said channel quality measuring means.

13. The mobile communication system according to claim 1, wherein
said channel quality measuring means measures reception levels of the subcarriers normalized by reception levels of all the subcarriers as the channel quality information; and
said subcarrier allocation deciding means decides the subcarrier allocation according to the normalized reception levels of the subcarriers measured by said channel quality measuring means.

14. The mobile communication system according to claim 1, wherein said subcarrier allocation deciding means decides the subcarrier allocation by placing priority on a mobile communication base station that continues communication for a fixed time period or more.

15. The mobile communication system according to claim 1, wherein said subcarrier allocation deciding means decides the subcarrier allocation to said plurality of mobile communication base stations one after another.

16. The mobile communication system according to claim 1, wherein said mobile communication terminal performs a soft handover by carrying out the multi-carrier radio communication of same data with said plurality of mobile communication base stations simultaneously.

17. The mobile communication system according to claim 1, wherein said mobile communication terminal performs the multi-carrier radio communication with high frequency utilization efficiency by carrying out the multi-carrier radio communication of different data with said plurality of mobile communication base stations simultaneously.

18. A mobile communication system in which a mobile communication terminal communicates with a plurality of mobile communication base stations simultaneously using a multi-carrier radio communication scheme, said mobile communication system comprising:
subcarrier allocation deciding means for deciding subcarrier allocation for each of said mobile communication base stations according to subcarrier numbers attached to individual subcarriers.
